# EUROPEAN PATENT SPECIFICATION

(11) **EP 0 404 149 B1**
(45) Date of publication and mention of the grant of the patent: **09.11.1994**
(21) Application number: 90111757.2
(22) Date of filing: 21.06.1990
(51) Int. Cl.: H04B 1/04, H04B 1/50

(54) **Antenna resonant circuit**
Antennenresonanzschaltung
Circuit résonant d'antenne

(30) Priority: 22.06.1989 DE 3920536
(43) Date of publication of application: 27.12.1990
(73) Proprietor: TEXAS INSTRUMENTS DEUTSCHLAND GMBH, 85356 Freising (DE)
(72) Inventor: Viereck, Bruno G., D-8051 Marzling, Freising (DE)
(74) Representative: Schwepfinger, Karl-Heinz, Dipl.-Ing.

(56) References cited:
- WO-A-88/08645
- PATENT ABSTRACTS OF JAPAN, vol. 4, no. 75 (E-13)(557) 31May 1980, & JP-A-55 044 285
- WIRELESS WORLD, vol. 81, no. 1469, January1975, LONDON page 12; LIEBER: 'Passive Solid State Antenna Switch'
- PATENT ABSTRACTS OF JAPAN, Vol. 9, no. 248 (E-347)(1971) 4October 1985, & JP-A-60 097 728

## Description

The invention relates to an antenna resonant circuit comprising a coil and a capacitor as frequency-determining elements for use in a transmitting/receiving device which in a transmitting operating phase transmits HF signals with high power and in a receiving operating phase receives HF signals with low power.

Fields of use exist for transmitting/receiving devices in which in the transmitting operating phase HF signals are transmitted with a fixed frequency whilst in the receiving operating phase HF signals with different frequencies, for example frequency-shifted signals, are received. This means that in the transmitting operating phase as narrow as possible a band should be used to achieve a good irradiation of the transmitted signal whilst in the receiving operating phase a certain band wideness of the band filter formed by the antenna resonant circuit and by the input circuit of the receiving section in the transmitting/receiving device must be achieved. One measure for doing this resides in forming the antenna resonant circuit and the input circuit of the receiving section as loosely coupled band filter. It has however been found in practice that this step does not suffice for maintaining in both operating phases a favourable transmission behaviour between the transmitting/receiving device and the antenna resonant circuit.

The invention is based on the problem of further developing an antenna resonant circuit of the type set forth at the beginning in such a manner that its resonant frequency can be influenced so that both in the transmitting operating phase and in the receiving operating phase a favourable transmission behaviour of the band filter coupling the antenna resonant circuit to the transmitting/receiving device is obtained.

This problem is solved according to the invention in that in parallel with the capacitor there is a series circuit of a frequency-determining component and a threshold value switch which is of high resistance when the voltage applied thereto is smaller than its threshold value and of low resistance when the voltage applied thereto is greater than its threshold value, and that the switching threshold of the threshold value switch is so set that it is greater than the voltage applied thereto in the receiving operating phase but smaller than the voltage applied thereto in the transmitting operating phase. In the antenna resonant circuit according to the invention the resonant frequency can be switched by means of the threshold value switch, the switching, based on the specific adjustment of the switching threshold, resulting automatically when there is a mode switching between the transmitting operating phase and the receiving operating phase, and vice versa. The frequency-governing element connected in series with the threshold value switch may be chosen such that a desired change of the resonant frequency results.

Further advantageous developments of the invention are set forth in the subsidiary claims.

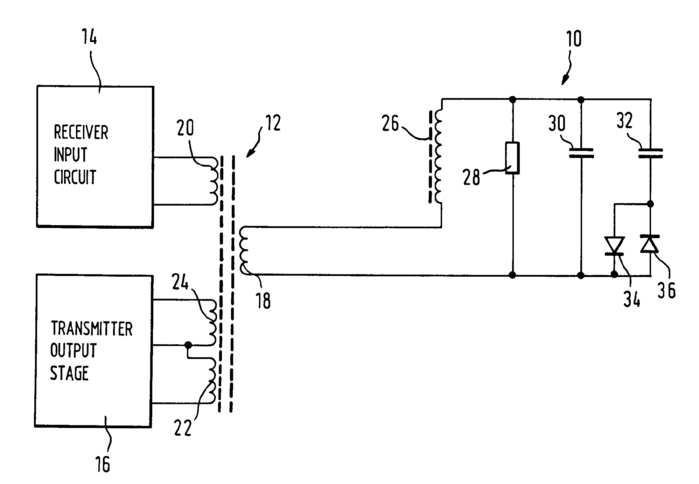

The invention will now be explained by way of example with reference to the drawing, the single Figure of which shows a circuit diagram of the antenna resonant circuit with its coupling to a transmitting/receiving device, only the major components necessary for the explanation of the invention being illustrated.

The antenna resonant circuit illustrated in the drawing is coupled via a transformer 12 to a transmitter/receiver device of which only the input circuit 14 of the receiver section and the output stage 16 of the transmitter section are illustrated.

The antenna resonant circuit 10 is coupled via a winding 18 to the winding 20 of the input circuit 14 and the windings 22 and 24 of the output stage 16. A coil 26 in the antenna resonant circuit 10 forms the element with the aid of which HF signals can be transmitted and also received. Furthermore, the antenna resonant circuit 10 includes parallel to the series circuit of the coils 26 and 18 a resistor 28, a capacitor 30 and a series circuit of a further capacitor 32 and two semiconductor diodes 34 and 36 connected antiparallel.

The semiconductor diodes 34, 36 form a threshold value switch which is in the high-resistance state as long as the voltage applied thereto lies beneath the threshold voltage of the semiconductor diodes. As soon as the threshold voltage of the semiconductor diodes is exceeded the threshold value switch assumes the low-resistance state so that then only the capacitor 32 parallel to the capacitor 30 is active on the antenna resonant circuit 10.

For transmitting-receiving devices it is typical that the radiated transmission power is substantially higher than the power of the received signals. This fact is utilized for actuating the threshold value switch comprising the semiconductor diodes 34, 36. In the transmitting-operating phase in the antenna resonant circuit 10 due to the relatively high transmission power high voltages occur which lead with certainty to a voltage occurring at the semiconductor diodes 34 and 36 which is greater than the threshold voltage thereof. This means that in the transmitting operating phase the capacitor 32 lies in parallel with the capacitor 30 and consequently a resonant frequency results for which the sum of the capacitances of the capacitor 30 and the capacitor 32 is a governing factor. In contrast, in the receiving operating phase at the semiconductor diodes 34, 36 only very low voltages occur which lie beneath the threshold voltage of said diodes. This means that the capacitor 32 is separate from the antenna resonant circuit so that only the capacitor 30 is a governing factor in the resonant frequency. This therefore gives in the receiving operating phase a higher resonant frequency than in the transmitting operating phase. This higher resonant frequency however results in a wider bandpass characteristic of the band filter formed by the antenna resonant circuit and the input circuit 14 of the receiver section. This broadbandedness is particularly desirable when, as mentioned at the beginning, the received HF signals are frequency-modulated, i.e. have a greater bandwidth than the signals transmitted by the antenna.

## Claims

1. Antenna resonant circuit comprising a coil and a capacitor as frequency-determining elements (26, 30) for use in a transmitting/receiving device which in a transmitting operating phase transmits HF signals with high power and in a receiving operating phase receives HF signals with low power, characterized in that in parallel with the capacitor (30) there is a series circuit of a frequency-determining component (32) and a threshold value switch (34, 36) which is of high resistance when the voltage applied thereto is smaller than its threshold value and of low resistance when the voltage applied thereto is greater than its threshold value, and that the switching threshold of the threshold value switch (34, 36) is so set that it is greater than the voltage applied thereto in the receiving operating phase but smaller than the voltage applied thereto in the transmitting operating phase.

2. Antenna resonant circuit according to claim 1, characterized in that the threshold value switch (34, 36) consists of two semiconductor diodes connected antiparallel.

3. Antenna resonant circuit according to claim 1 or 2, characterized in that the frequency-determining component (32) in the series circuit is a capacitor.

## Patentansprüche

1. Antennenschwingkreis mit einer Spule und einem Kondensator als frequenzbestimmende Elemente (26,30) zur Anwendung in einem Sende/Empfangs-Gerät, das in einer Sende-Betriebsphase HF-Signale mit hoher Leistung aussendet und in einer Empfangs-Betriebsphase HF-Signale mit niedriger Leistung empfängt, dadurch gekennzeichnet, daß parallel zu dem Kondensator (30) eine Serienschaltung aus einem frequenzbestimmenden Bauelement (32) und einem Schwellenwertschalter (34, 36) liegt, der hochohmig ist, wenn die an ihm anliegende Spannung kleiner als seine Schaltschwelle ist, und der niederohmig ist, wenn die an ihm anliegende Spannung größer als seine Schaltschwelle ist, und daß die Schaltschwelle des Schwellenwertschalters (34, 36) so eingestellt ist, daß sie größer als die in der Empfangs-Betriebsphase an ihm anliegende Spannung, aber kleiner als die in der Sende-Betriebsphase an ihm anliegende Spannung ist.

2. Antennenschwingkreis nach Anspruch 1, dadurch gekennzeichnet, daß der Schwellenwertschalter (34, 36) aus zwei antiparallel geschalteten Halbleiterdioden besteht.

3. Antennenschwingkreis nach Anspruch 1 oder 2, dadurch gekennzeichnet, daß das frequenzbestimmende Bauelement (32) in der Serienschaltung ein Kondensator ist.

## Revendications

1. Circuit résonant pour antenne comprenant une bobine et un condensateur constituant des éléments de détermination de fréquence (24,30) pour être utilisés dans un dispositif émetteur/récepteur qui lors d'une phase d'une opération d'émission émet des signaux à haute fréquence et à puissance élevée et lors d'une phase d'une opération de réception reçoit des signaux à haute fréquence et puissance faible, caractérisé en ce qu'un circuit de composants de détermination de fréquence (32) en série et un commutateur à valeur de seuil (34,36) dont la résistance est élevée lorsque la tension qui lui est appliquée est inférieure à sa valeur de seuil et dont la résistance est faible lorsque la tension qui lui est appliquée est supérieure à sa valeur de seuil sont disposés en parallèle sur le condensateur (30), et en ce que le seuil de commutation du commutateur à valeur de seuil (34,36) est positionné de sorte qu'il soit supérieur à la tension qui lui est appliquée lors de la phase de l'opération de réception mais inférieur à la tension qui lui est appliquée lors de la phase de l'opération d'émission.

2. Circuit résonant pour antenne selon la revendication 1, caractérisé en ce que le commutateur à valeur de seuil (34,36) est constitué de deux diodes à semiconducteurs connectées de façon antiparallèle.

3. Circuit résonant pour antenne selon l'une des revendications 1 et 2, caractérisé en ce que le composant de détermination de fréquence (32) dans le circuit en série est un condensateur.
